# EUROPEAN PATENT SPECIFICATION

(11) **EP 4 652 237 B1**
(45) Date of publication and mention of the grant of the patent: **18.11.2026**
(21) Application number: 24702184.3
(22) Date of filing: 19.01.2024
(51) Int. Cl.: C09K 21/02, C08K 3/016, C08K 3/34, C08L 1/02, C09D 5/18, C09D 7/40, C09D 101/02, C09K 21/14

(54) **THIN BIO-BASED FIRE RETARDANT COATINGS**
DÜNNE FLAMMHEMMENDE BESCHICHTUNGEN AUF BIOBASIS
REVÊTEMENTS IGNIFUGES MINCES À BASE BIOLOGIQUE

(30) Priority: 20.01.2023 FI 20235059
(43) Date of publication of application: 26.11.2025
(73) Proprietor: Teknologian tutkimuskeskus VTT Oy, 02150 Espoo (FI)
(72) Inventor: LAHTINEN, Panu, 02150 Espoo (FI); KUNNARI, Vesa, 02150 Espoo (FI)
(74) Representative: Laine IP Oy
(86) International application number: PCT/FI2024/050019
(87) International publication number: WO 2024/153858

(56) References cited:
- WO-A1-2019/002680
- US-A1- 2019 010 253
- US-A1- 2022 120 336
- ANDONG LIU ET AL: "Clay Nanopaper with Tough Cellulose Nanofiber Matrix for Fire Retardancy and Gas Barrier Functions", BIOMACROMOLECULES, vol. 12, no. 3, 14 March 2011 (2011-03-14), pages 633 - 641, XP055074548, ISSN: 1525-7797, DOI: 10.1021/bm101296z
- F. CAROSIO ET AL: "Oriented Clay Nanopaper from Biobased Components-Mechanisms for Superior Fire Protection Properties", APPLIED MATERIALS & INTERFACES, vol. 7, no. 10, 27 February 2015 (2015-02-27), US, pages 5847 - 5856, XP055751141, ISSN: 1944-8244, DOI: 10.1021/am509058h

## Description

### FIELD

The present invention relates to a non-toxic bio-based fire retardant composition and fire protective coating, and to a method of producing such.

### BACKGROUND

Fire retardants are a diverse group of chemicals, which are added to manufactured materials as finishes or coatings. Fire retardants inhibit spread of fire by suppressing the chemical reactions in the flame or by the formation of a protective layer on the surface of the material. Current opinion on environmental and health issues is a controversial point, but there are reports on unreliability, environmental harmfulness and health hazards of these compounds.

Fire protection of combustible structures is typically managed by fire retardant chemicals. Efficiency of these chemicals is sometimes questioned and they may also pose toxic hazards, for example halogenated compounds are recalcitrant in nature and can be enriched in food chains.

For example, treatments exploiting the synergism between boron, phosphorus and nitrogen to promote char formation are prominently used technologies (e.g. TeknoSafe 2407). Despite being well-established technologies, these possess threats to environment during manufacturing, lifecycle and end-of-life recycling or composting. Risks for human health have been identified as well on several levels.

For these reasons non-toxic bio-based fire retardants are of industrial interest. Novel bio-based fire retardants derived from natural resources would provide safer and sustainable chemical burden reducing solutions into ecosystems.

Carosio *et al.* (2015) and Liu *et al.* (2011) describe and characterize cellulose nanofiber (CNF)/clay nanocomposites, which are prepared by simple filtration. These nanocomposites are reported to have superior fire protection properties. The authors have identified the physical and chemical mechanisms behind the composites and concluded that the properties relate to the unique nanostructure and its low thermal conductivity, as well as high gas barrier properties and material interactions for char formation.

In these prior art methods the protective layers are obtained from very dilute suspensions (1-2%) by filtration. Thus, the methods are slow to carry out and require large amounts of water to be removed and/or evaporated.

WO 2019/002680 A1 on the other hand discloses fire protective compositions and structures comprising high-consistency nanofibrillated cellulose together with mineral components, which provide easy direct applicability onto a target surface. Higher adhesion strengths to target surfaces and thinner coatings would however be beneficial features for such technology.

### SUMMARY OF THE INVENTION

The invention is defined by the features of the independent claims. Some specific embodiments are defined in the dependent claims.

According to an aspect of the present invention, there is provided a bio-based fire-retardant composition in which butylated high-consistency nanofibrillated cellulose together with an inorganic pigment assembly as a fire-protective layer, which is easily applicable to target surfaces.

According to a second aspect of the present invention, there is provided a fire protective coating comprising the fire retardant composition.

These and other aspects, together with the advantages thereof over known solutions are achieved by the present invention, as hereinafter described and claimed.

The fire-retardant composition of the present invention is mainly characterized by what is stated in the characterizing part of claim 1.

The fire-protective coating of the present invention is mainly characterized by what is stated in the characterizing part of claim 4.

Considerable advantages are obtained by means of the invention. For example, butylated CNF can be produced at higher solids content (for example 5%) than many conventional CNF, which typically have low solids content of around 1-2%. The present technology thus provides more energy efficient solution. In addition, the coating formulations provide better fire retardant properties compared to other nanocellulose-based coatings according to EN-ISO 19925-2. The present formulation has stronger adhesion to wood surfaces compared to other nanocellulose-based coatings. It has also shown strong adhesion to metallic surfaces and for multi-material surfaces including plastic surfaces. When air is mixed to butylated CNF-pigment mixture, pronounced foaming is created. This provides a bulky coating layer to surfaces applied upon, which enhances fire retardant properties even further.

Next, the present technology is described more closely with reference to certain embodiments.

### EMBODIMENTS

The present technology provides a method of producing high-consistency bio-based fire retardant (FR) coating formulation using butylated nanocellulose (CNF) and inorganic pigments. FR coating formulation can exceed solids of 10%. Final coating has high adhesion strength and results in lower burned weight compared to a commercial reference.

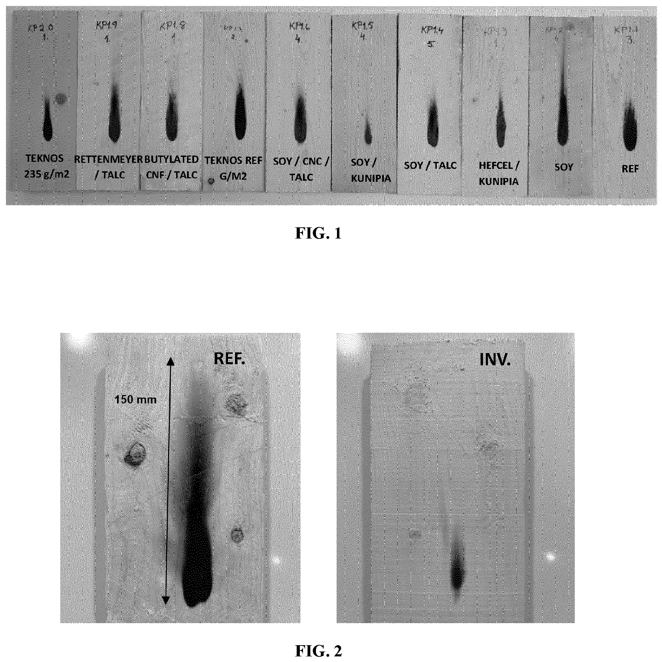

FIGURE 1 is a photo of burned 1-time coated samples according to EN-ISO 19925-2 (with 30s flame explosure).
FIGURE 2 is another photo of burned 1-time coated samples according to EN-ISO 19925-2 (with 30s flame explosure). The left photo shows a reference sample and the right photo shows a sample according to the present technology.

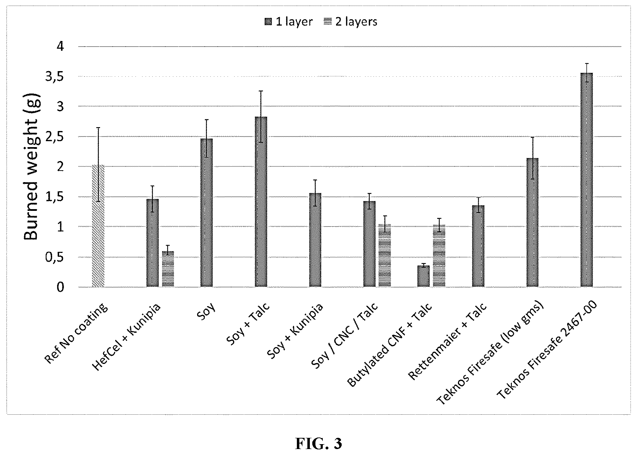

FIGURE 3 is a chart showing comparison of different burned weight of sawn timber samples. Compared to HefCel / Kunipia coating, several trial points according to the present technology perform equally or better. Teknos coating is based on intumescent action (swelling upon heat explosure) and is not comparable directly.

According to one embodiment, the present technology provides a novel approach using mainly nanocellulose combined with inorganic pigment applied to surface of selected timber or other wood-based products to result an isolating, flame retardant layer either by continuous sub-millimeter layer or as foamed layer in centimetre scale.

According to another embodiment, the present technology is used to protect cellulose containing fabrics against ignition by applying layer of nanocellulose combined with pigment on and partly impregnated into fabric using rotary or flat-bed silk screen printing.

According to even further embodiment, the present technology is used to bind chipboard or veneer possibly combined with confined wood components such as lignins or tannins to produce a complete fire-retardant product like chip board, OSD board or plywood.

All approaches listed above can be used to a dual functionality as well. Nanocellulose has excellent binding capacity which can be used to apply color pigments for wood and fabrics together when providing flame retardancy.

The present technology is based on chemically modifying cellulosic pulp, such as for example bleached kraft pulp, to butylated cellulose pulp. Typically the degree of substitution (DS) after the modification is 0.05-0.3. Modified pulp is then mechanically treated by using grinding and microfluidizer to modify the fibre size, followed by mixing with selected inorganic pigment. Also the pigment slurry can be modified to a smaller size distribution by using high-shear mechanical treatment. A larger scale pigment is preferred if dry solids of the mixture is prioritized. The mixture is then applied on a surface to be protected by using brush, roller, spray or other similar coating method. Coating forms a layer on top of the surface and provides enhanced flame retardant properties (such as for example reduced gas exchange, reduced heat flux and physical barrier) for the material compared to existing solutions.

One aspect of the present technology is a bio-based non-toxic fire-retardant composition, comprising a mixture of:
- butylated cellulose nanofibers (CNF) at consistency of 5 to 15%, and
- at least one type of inorganic pigment in a form of wet slurry or paste
wherein the composition comprises 40 to 60 wt-% of the butylated CNF and 40 to 60 wt-% of the inorganic pigment, the weight ratio preferably being about 50/50.

According to one embodiment, the inorganic pigment is selected from talc, precipitated calcium carbonate (PCC) and ground calcium carbonate (GCC).

In a preferred embodiment of, the fire-retardant composition is applicable directly onto a target surface on-site by spraying, painting or rolling.

One embodiment of the present technology is a fire-protective coating having a layered structure, comprising the fire-retardant composition as a protective layer on a target surface.

In one embodiment, the fire-protective coating comprises a layered structure of 1 to 5 layers, which total thickness is 10 to 100 µm, preferably 40 to 60 µm and most suitably about 50 µm.

It is preferred that the fire-protective coating has an improved adhesion strength (N) to birch plywood surface compared to existing solutions, such as of at least 200 N, preferably at least 250 N and most suitably at least 300 N.

It is also preferred that the dry weight per square meter of the protective layer is between 20 and 30 g/m².

One embodiment of the present technology is a method for producing a fire-retardant composition, comprising at least the steps of:
- chemically modifying cellulosic pulp to butylated cellulose pulp,
- mechanically treating the modified pulp by using grinding and a microfluidizer to modify the fibre size into cellulose nanofibers (CNF),
- mixing the chemically and mechanically modified butylated CNF having consistency of between 5 to 15% with an inorganic pigment at a weight ratio of about 50/50.

Use of the fire-retardant composition and/or the fire-protective coating disclosed herein on plastic, paper, carton, cellulose, wood and metal surfaces for fire protection belongs to the scope of the present technology.

In addition, use of the fire-retardant composition and/or the fire-protective coating disclosed herein on surfaces comprising cellulose or other natural fibrous material capable of forming chemical bonds together with the fire-retardant composition and/or fire-protective coating belongs to the scope of the present technology.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in protecting cellulose and wooden structures within constructions, furniture and interior products from fire. Another embodiment is to fire protect cellulose materials in garments, textiles and fabrics. In addition, the present invention can be applied to paints and coating materials. In general, the embodiments of the present invention can be used on plastic, paper, carton, cellulose, wood and metal surfaces for fire protection.

### EXAMPLES

### EXAMPLE 1. Preparation of CNF

Bleached softwood pulp from a Finnish pulp mill (MetsäFibre, Äänekoski, Finland) was used as the raw material for producing butylated CNF. The butylation treatment was done with the excess of butylation reagent butyl glycidyl ether (CAS 2426-08-6). The ratio of reagent was five times the amount of pulp fibres. Reaction was done at low water content and in alkaline conditions. First the pulp was activated in a mixture of tert-butanol (t-BuOH), water and NaOH at 30°C and stirring overnight. After premixing the pulp slurry was further heated to 45°C and butyl glycidyl ether was added gradually to the slurry while mixing. The reaction was performed at 45°C overnight and then cooled down to 20°C and neutralized with HCl. Finally, the modified pulp was washed carefully with ethanol and once with water. After washing, the pulp was stored moist in a refrigerator before fibrillation.

The butylated pulp slurry was first soaked at 5% consistency and dispersed using a high shear rotor-stator Ultra-Turrax T 18 mixer for 5 minutes at 7000 rpm. The amount of slurry was 2 kg and it was pre-refined twice in a grinder (Supermasscolloider MKZA10-15J, Masuko Sangyo Co., Japan) at 1500 rpm. The gel was prepared by feeding the butylated and pre-refined fibre suspension once into a Microfluidics fluidizer M110-EH with two Z-type chambers. The fibre suspension passed through the chambers having a diameter of 400 µm and 100 µm. The operating pressure was 1800 bar. The final product formed a white and viscous hydrogel.

### EXAMPLE 2. Mixing of pigment and CNF

Commercially available talc pigment Finntalc P60SL was used in this example. Inorganic pigment and CNF were disintegrated separately prior to mixing. Talc was mixed into water (20 °C) to reach 35 % dry solids content under high shear mixing conditions using Diaf mixer (Pilvad A/S) running at approximately 3000 rpm and disintegration was continued for 30 minutes to disperse all talc particles. After dispersing talc slurry was processed once at 35% solids using high-shear processor Microfluidizer M110-EH to obtain more homogeneous and smaller particle size (d50 value < 10 µm). Processing was done at 1800 bar and using chambers 400 µm and 100 µm.

Butylated CNF was mixed with Diaf (Pilvad A/S) for 60 minutes to obtain a homogenous slurry. Then talc pigments were added slowly to 5 % CNF slurry under high shear mixing using Diaf mixer. Mixing was continued for at least 30 minutes. CNF and talc pigments were mixed in weight ratio (fibre / clay) of 50 %. Total solids of CNF / talc mixture was 10.0%

The performance of pigment or filler in terms of fire retardancy is dependent on for example the size distribution and aspect ratio.

### EXAMPLE 3. Coating of test samples

The mixture of CNF and inorganic pigment, in this case talc, has a considerable affinity to various types of surfaces. The surface energy, chemical composition and surface topography play key role in affinity and need to be taken into account and controlled in each case. Also, single or multiple following layers may be added on top of under laying layer.

Several alternative methods exist when applying CNF and pigment mixture onto a surface to be protected. Key role in addition is that it is done directly onto surface. The application is at least possible to implement using spraying, paint brush or roller. Commercially available equipment from regular hardware stores can be used without any issues when operating with CNF and pigment mixture. To maximize adhesion to wood surface here brush application method was implemented. Table 1 shows adhesion strength of butylated CNF mixed with talc in comparison with high-consistency CNF mixed with nanoscale pigment coated on birch plywood (Koskisen Oy) surface. Adhesion strength was measured by gluing an aluminium button D20mm using epoxy (Gorilla Glue Company) on coated sample and measuring the adhesion force in Newtons using Lloyd LS1 (Ametek) tensile tester.

**Table 1.**

| **Sample** | **Adhesion strength, N** |
|---|---|
| High-consistency CNF / nanoscale pigment | 133 ± 59 |
| Butylated CNF / Talc | 286 ± 17 |

### EXAMPLE 4. Trials for fire-retardancy

Trials were done using sawn timber planks (22x100mm) from softwood spruce as test material. CNF and pigment mixture prepared as described in Example 2 was used. The planks were conditioned standard moisture and temperature room for one week prior to experiments and weighted. Coating was applied as a single layer until a coat weight of approximately 25 g/m2 calculated based on dry solids content of the coating mixture was achieved. CNF and pigment mixture was added using a 40 mm wide brush. The trials for fire retardant effects were implemented by following standard "EN ISO 11925-2:2010 Reaction to fire tests - Ignitability of products subjected to direct impingement of flame - Part 2: Single-flame source test (ISO 11925-2:2010)*".* The experimental set up was identical apart from excluding the controlled air flow in the fume hood surround the experiment set up.

Test pieces were placed in aluminium rig and procedures and distances set according to standard ISO 11925-2:2010 with addition of measuring weight difference of samples after burn test. The trials were carried out in triplicates. The result of each trial was evaluated 1) by visual observation of ignition and by measuring 2) the weight difference of timber planks before and after the trial, 3) the height of burned area and 4) burn time after 30s flame exposure. Untreated intact timber planks served as reference.

The results are summarized in Table 2. Coating from butylated CNF and talc had lower weight loss after burn test compared to the sample without coating. Height of the burned area did not differ significantly from the reference sample when taking into consideration the variation.

**Table 2. Summary of the results of the fire-retardant trials.**

| **Sample** | **Weight difference after burn test, g** | **Height of the burned area, mm** | **Burn time after flame exposure, s** |
|---|---|---|---|
| Ref, no coating | 2.0 ± 0.6 | 75 ± 9.4 | Not measured |
| Butylated CNF / Talc | 0.36 ± 0.04 | 61 ± 5.5 | No after burn |

**Table 3. Adhesion to birch plywood surface**

| **Trial point** | **Description** | **Solids, %** | **Adhesion strength, N** | **Comment** |
|---|---|---|---|---|
| 1.2 | Soy | 4,5 | - | Only CNF for comparison |
| 1.3 | **HefCel + Kunipia** | 8,5 | **133** ± 59 | Plenty of additional dilution |
| 1.4 | Soy + Talc | 7,6 | 142 ± 51 | No dilution |
| 1.5 | Soy + Kunipia | 4,9 | 80 ± 8 | Plenty of additional dilution |
| 1.6 | Soy / CNC / Talc | 11,5 | 178 ± 9 | Dilution due to CNC |
| 1.8 | **Butylated CNF + Talc** | 10,0 | **286** ± 17 | No dilution, dripply |
| 1.9 | **Rettenmaier + Talc** | 15,7 | **248 ±** 21 | No dilution needed |

| | | | | |
|---|---|---|---|---|
| • Adhesion is doubled compared to HefCel / Kunipia reference in TPs 1.8 and 1.9 • Effect partially related to filler size as well → Soy CNF gives higher adhesion with talc compared to Kunipia | | | | |

**Table 4. OTR of films**

| **Trial point** | **DSC, %** | **Film thickness, µm** | **OTR, cc / (m² x day)** | **Comment** |
|---|---|---|---|---|
| HefCel / sorbitol 30* | 12,8 ± 0,1 | 44 | - | Not measurable |
| Soy / sorbitol 30 | 6,0 ± 0,3 | 36 | - | Not measurable |
| Soy 50 / CNC 50/ sorbitol 30 | 8,3 ± 0,2 | 44 | 1,1 ± 0,0 | Dilution due to CNC |
| Butylated CNF / sorbitol 30 | 7,1 ± 0,2 | - | - | No film formation |
| Rettenmaier / 0.2% CNF / sorbitol 30 | 13,0 ± 0,8 | 52 | 0,6 ± 0,1 | No dilution needed |

| | | | | |
|---|---|---|---|---|
| • Soy CNF mixed with commercial CNC and Rettenmaier (Arbocel) based formulations provide comparable oxygen barrier for HefCel • Sorbitol was mixed with CNF grades as powder to elevate DSC in all trial points | | | | |

### CITATION LIST

### Patent literature

WO 2019/002680 A1

### Non-patent literature:

1. Carosio F., Kochumalayil J., Cuttica F., Camino G., Berglung L., Oriented Clay Nanopaper from Biobased Components - Mechanism for Superior Fire Protection Properties, ACS Applied Materials & Interfaces (2015), 7(10), 5847-5856.
2. Liu A., Walther A., Ikkala O., Belova L., Berglund A., Lars A., Clay nanopaper with tough cellulose nanofiber matrix for fire retardancy and gas barrier functions, Biomacromolecules (2011), 12(3), 633-641.

## Claims

1. A bio-based non-toxic fire retardant composition, **characterized in** comprising a mixture of:
- butylated cellulose nanofibers (CNF) at consistency of 5 to 15%, and
- at least one type of inorganic pigment in a form of wet slurry or paste
wherein the composition comprises 40 to 60 wt-% of the butylated CNF and 40 to 60 wt-% of the inorganic pigment, the weight ratio preferably being about 50/50.

2. The fire-retardant composition according to claim 1, **characterized in that** the inorganic pigment is selected from talc, precipitated calcium carbonate (PCC) and ground calcium carbonate (GCC).

3. The fire retardant composition according to claim 1 or 2, **characterized in** being applicable directly onto a target surface on-site by spraying, painting or rolling.

4. A fire protective coating having a layered structure, **characterized in** comprising the fire-retardant composition according to any of claims 1 to 3 as a protective layer on a target surface.

5. The fire protective coating according to claim 4, **characterized in** having a layered structure of 1 to 5 layers, which total thickness is 10 to 100 µm, preferably 40 to 60 µm and most suitably about 50 µm.

6. The fire protective coating according to claim 4 or 5, **characterized in** having adhesion strength to birch plywood surface of at least 200 N, preferably at least 250 N and most suitably at least 300 N.

7. The fire protective coating according to any of claims 4 to 6, **characterized in that** the dry weight per square meter of the protective layer is between 20 and 30 g/m².

8. The fire protective coating according any of claims 4 to 7, **characterized in that** the coating is certified by EN ISO 11925-2 standard.

9. A method for producing a fire retardant composition according to any of claims 1 to 3, **characterized in** comprising at least the steps of:
- chemically modifying cellulosic pulp to butylated cellulose pulp,
- mechanically treating the modified pulp by using grinding and a microfluidizer to modify the fibre size into cellulose nanofibers (CNF),
- mixing the chemically and mechanically modified butylated CNF having consistency of between 5 to 15% with an inorganic pigment at a weight ratio of about 50/50.

10. Use of the fire retardant composition according to any of claims 1 to 3 and/or the fire protective coating according to any of claims 4 to 8 on plastic, paper, carton, cellulose, wood and metal surfaces for fire protection.

11. Use of the fire retardant composition according to any of claims 1 to 3 and/or the fire protective coating according to any of claims 4 to 8 on surfaces comprising cellulose or other natural fibrous material capable of forming chemical bonds together with the fire-retardant composition and/or fire protective coating.

## Patentansprüche

1. Biobasierte ungiftige flammhemmende Zusammensetzung, **gekennzeichnet dadurch, dass** sie eine Mischung umfasst aus:
- butylierten Cellulosenanofasern (CNF) mit einer Konsistenz von 5 bis 15 % und
- mindestens einer Art von anorganischem Pigment in Form einer feuchten Aufschlämmung oder Paste,
wobei die Zusammensetzung 40 bis 60 Gew.-% der butylierten CNF und 40 bis 60 Gew.-% von dem anorganischen Pigment umfasst, wobei das Gewichtsverhältnis vorzugsweise etwa 50/50 beträgt.

2. Flammhemmende Zusammensetzung nach Anspruch 1, **gekennzeichnet dadurch, dass** das anorganische Pigment aus Talkum, gefälltem Calciumcarbonat (PCC) und gemahlenem Calciumcarbonat (GCC) ausgewählt ist.

3. Flammhemmende Zusammensetzung nach Anspruch 1 oder 2, **gekennzeichnet dadurch, dass** sie durch Sprühen, Streichen oder Rollen direkt vor Ort auf eine Zieloberfläche aufbringbar ist.

4. Flammschutzbeschichtung, die eine geschichtete Struktur aufweist, **gekennzeichnet dadurch, dass** sie die flammhemmende Zusammensetzung nach einem der Ansprüche 1 bis 3 als eine Schutzschicht auf einer Zieloberfläche umfasst.

5. Flammschutzbeschichtung nach Anspruch 4, **gekennzeichnet dadurch, dass** sie eine geschichtete Struktur aus 1 bis 5 Schichten aufweist, deren Gesamtdicke 10 bis 100 µm, vorzugsweise 40 bis 60 µm und am meisten geeignet etwa 50 µm beträgt.

6. Flammschutzbeschichtung nach Anspruch 4 oder 5, **gekennzeichnet dadurch, dass** sie Haftfestigkeit auf der Oberfläche von Birkensperrholz von mindestens 200 N, vorzugsweise mindestens 250 N und am meisten geeignet mindestens 300 N aufweist.

7. Flammschutzbeschichtung nach einem der Ansprüche 4 bis 6, **gekennzeichnet dadurch, dass** das Trockengewicht pro Quadratmeter der Schutzschicht zwischen 20 und 30 g/m² beträgt.

8. Flammschutzbeschichtung nach einem der Ansprüche 4 bis 7, **gekennzeichnet dadurch, dass** die Beschichtung nach der Norm EN ISO 11925-2 zertifiziert ist.

9. Verfahren zum Herstellen einer flammhemmenden Zusammensetzung nach einem der Ansprüche 1 bis 3, **gekennzeichnet dadurch, dass** sie mindestens die folgenden Schritte umfasst:
- chemisches Modifizieren von cellulosischem Zellstoff zu butyliertem Cellulosezellstoff,
- mechanisches Behandeln des modifizierten Zellstoffs durch Verwenden von Mahlen und eines Mikrofluidizers, um die Fasergröße zu Cellulosenanofasern (CNF) zu modifizieren,
- Mischen der chemisch und mechanisch modifizierten butylierten CNF, die eine Konsistenz zwischen 5 bis 15 % aufweisen, mit einem anorganischen Pigment in einem Gewichtsverhältnis von etwa 50/50.

10. Verwendung der flammhemmenden Zusammensetzung nach einem der Ansprüche 1 bis 3 und/oder der Flammschutzbeschichtung nach einem der Ansprüche 4 bis 8 auf Kunststoff-, Papier-, Karton-, Cellulose-, Holz- und Metalloberflächen zum Flammschutz.

11. Verwendung der flammhemmenden Zusammensetzung nach einem der Ansprüche 1 bis 3 und/oder der Flammschutzbeschichtung nach einem der Ansprüche 4 bis 8 auf Oberflächen, die Cellulose oder andere natürliche faserige Materialien umfassen, die in der Lage sind, zusammen mit der flammhemmenden Zusammensetzung und/oder Flammschutzbeschichtung chemische Bindungen zu bilden.

## Revendications

1. Composition ignifuge non toxique biosourcée, **caractérisée en ce qu'**elle comprend un mélange de :
- nanofibres de cellulose butylée (CNF) à une consistance de 5 à 15 %, et
- au moins un type de pigment inorganique sous une forme de bouillie ou de pâte humides,
dans laquelle la composition comprend 40 à 60 % en poids de CNF butylée et 40 à 60 % en poids de pigment inorganique, le rapport pondéral étant de préférence d'environ 50/50.

2. Composition ignifuge selon la revendication 1, **caractérisée en ce que** le pigment inorganique est sélectionné parmi du talc, du carbonate de calcium précipité (PCC) et du carbonate de calcium broyé (GCC).

3. Composition ignifuge selon la revendication 1 ou 2, **caractérisée en ce qu'**elle peut être appliquée directement sur une surface cible sur site par pulvérisation, peinture ou laminage.

4. Revêtement de protection contre l'incendie présentant une structure en couches, **caractérisé en ce qu'**il comprend la composition ignifuge selon l'une quelconque des revendications 1 à 3 comme couche protectrice sur une surface cible.

5. Revêtement de protection contre l'incendie selon la revendication 4, **caractérisé en ce qu'**il présente une structure en couches de 1 à 5 couches, dont l'épaisseur totale est de 10 à 100 µm, de préférence de 40 à 60 µm et de la manière la plus appropriée d'environ 50 µm.

6. Revêtement de protection contre l'incendie selon la revendication 4 ou 5, **caractérisé en ce qu'**il présente une résistance d'adhérence à une surface de contreplaqué en bouleau d'au moins 200 N, de préférence d'au moins 250 N et de la manière la plus appropriée d'au moins 300 N.

7. Revêtement de protection contre l'incendie selon l'une quelconque des revendications 4 à 6, **caractérisé en ce que** le poids sec par mètre carré de la couche protectrice est entre 20 et 30 g/m².

8. Revêtement de protection contre l'incendie selon l'une quelconque des revendications 4 à 7, **caractérisé en ce que** le revêtement est certifié conforme à la norme EN ISO 11925-2.

9. Procédé de production d'une composition ignifuge selon l'une quelconque des revendications 1 à 3, **caractérisé en ce qu'**il comprend au moins les étapes de :
- modification chimique d'une pâte de cellulose en pâte de cellulose butylée,
- traitement mécanique de la pâte modifiée à l'aide d'un broyage et d'un microfluidiseur pour modifier la taille de fibres en nanofibres de cellulose (CNF),
- mélange de la CNF butylée modifiée chimiquement et mécaniquement présentant une consistance entre 5 et 15 % avec un pigment inorganique selon un rapport pondéral d'environ 50/50.

10. Utilisation de la composition ignifuge selon l'une quelconque des revendications 1 à 3 et/ou du revêtement de protection contre l'incendie selon l'une quelconque des revendications 4 à 8 sur des surfaces en plastique, papier, carton, cellulose, bois et métal pour la protection contre l'incendie.

11. Utilisation de la composition ignifuge selon l'une quelconque des revendications 1 à 3 et/ou du revêtement de protection contre l'incendie selon l'une quelconque des revendications 4 à 8 sur des surfaces comprenant de la cellulose ou un autre matériau fibreux naturel capable de former des liaisons chimiques conjointement avec la composition ignifuge et/ou le revêtement de protection contre l'incendie.
